Europäisches Patentamt

European Patent Office

Office européen des brevets

(11) Numéro de publication: **0 377 382 B1**

(12) FASCICULE DE BREVET EUROPEEN

(45) Date de publication de fascicule du brevet: **09.03.94**

(51) Int. Cl.⁵: **F16L 47/00**, F16L 47/02, E21D 17/00, B29C 67/18

(21) Numéro de dépôt: **89403671.4**

(22) Date de dépôt: **28.12.89**

(54) **Procédé pour intégrer un embout métallique à un tube en matériau composite bobiné.**

(30) Priorité: **29.12.88 FR 8817392**

(43) Date de publication de la demande:
**11.07.90 Bulletin 90/28**

(45) Mention de la délivrance du brevet:
**09.03.94 Bulletin 94/10**

(84) Etats contractants désignés:
**BE DE ES GB GR IT NL**

(56) Documents cités:
**EP-A- 0 044 380
GB-A- 2 017 567
GB-A- 2 051 303
US-A- 4 236 386**

(73) Titulaire: **AEROSPATIALE Société Nationale Industrielle
37, Boulevard de Montmorency
F-75016 Paris(FR)**

Titulaire: **INSTITUT FRANCAIS DU PETROLE
1 et 4 Avenue de Bois-Préau
BP 311
F-92506 Rueil Malmaison Cédex(FR)**

(72) Inventeur: **Fuchs, Jean-François**
**211 La Lande
F-33480 Sainte Hélène(FR)**
Inventeur: **Auberon Marcel
14 Allée du Pasteur
Résidence Orion
F-33160 Le Haillan(FR)**
Inventeur: **Odru Pierre
7 rue Pablo Picasso
F-94120 Fontenay s/Bois(FR)**
Inventeur: **Sparks Charles
19bis rue Pasteur
F-78110 Le Vésinet(FR)**

(74) Mandataire: **Lhuillier, René et al
Cabinet Lepeudry,
52, avenue Daumesnil
F-75012 Paris (FR)**

## Description

La présente invention est relative à un procédé pour fixer un embout métallique sur un tube en un matériau composite. De tels tubes en matériau composite sont destinés à être notamment utilisés dans la recherche pétrolière en mer.

Dans ce domaine particulier, les tubes et leurs embouts doivent résister à des forces de traction pouvant atteindre, dans des conditions normales d'utilisation, un million de newtons environ ; c'est pourquoi on préfère encore actuellement utiliser des tubes métalliques à embouts métalliques dont on connaît parfaitement la résistance à de telles charges. En effet, on a pu calculer que le flux de traction exprimé par la formule $\frac{T}{\pi D}$ , dans laquelle T est l'effort de traction et D le diamètre du tube, peut atteindre dans ce domaine, environ 3 500 000 newtons/mètre.

Dans ce domaine comme celui de la recherche pétrolière en mer, les tubes en matériau composite munis d'embouts métalliques, dont les performances peuvent être comparables à celles des tubes métalliques actuels, présentent des avantages certains notamment du fait de leur résistance à la fatigue et à la corrosion, et de leur moindre poids.

On notera par ailleurs que des liaisons connues de tubes en matériaux composites munis d'embouts qui seraient également en composite seraient inacceptables pour ces applications particulières car elles ne permettraient pas non plus d'atteindre les performances requises.

On connaît actuellement des procédés industriels pour réaliser des tubes en matériau composite muni d'embouts métalliques, et capables de supporter des efforts de traction importants, comme décrits dans le GB-A-2 051 303 et le EP-A-0 044 380.

Selon un premier procédé tel que décrit dans le brevet français 2 509 011, on place un insert métallique conique à l'extrémité d'un tube en matériau composite et entre la surface externe de cet embout et la paroi interne du tube est disposée une feuille d'élastomère qui est collée sur cette surface externe, aussi les charges sont transmises par l'intermédiaire de cette couche élastomère. Après une première polymérisation du tube, un second élément métallique en forme de coquille est disposé sur le composite polymérisé puis fretté par un bobinage circonférentiel par exemple de fibres de verre. La liaison métal-composite est assurée aussi par l'intermédiaire d'une autre couche élastomère et une seconde cuisson est alors nécessaire pour assurer la polymérisation du frettage externe et des films de colle.

Selon un autre procédé permettant d'assembler un tube réalisé par enroulement de filaments à un autre corps, des enveloppes métalliques creuses et tubulaires sont intercalées entre des couches de fibres réalisées par enroulement de filaments espacés dans le sens radial, et cela au niveau des extrémités. La liaison est assurée par des dispositifs de fixation qui traversent le composite et les enveloppes métalliques. Dans ce cas l'effort de traction appliqué à l'embout métallique est transmis à la structure composite par effet de matage.

Mais avec ces procédés la fabrication est longue et coûteuse car elle nécessite, soit des interventions manuelles nombreuses durant la fabrication, soit des cycles de fabrication longs notamment à cause de plusieurs cycles de polymérisation et des nombreuses manutentions qu'ils occasionnent, soit encore des outillages spécifiques qui sont indispensables à une bonne qualité de fabrication, comme par exemple le perçage et la mise en place des dispositifs de fixation évoqués pour le 2ème procédé.

Il existe encore un autre procédé d'assemblage d'un embout métallique et d'un tube en matériau composite haute-pression dans lequel l'extrémité d'une pièce en matériau composite recouvre un embout dont l'extrémité porte un épaulement, par exemple de forme trapézoïdale, autour duquel sont bobinées des fibres de renfort du matériau composite, embout dont l'autre extrémité comporte un raccord haute-pression pour l'assemblage avec la pièce métallique à raccorder. Les angles de bobinage par rapport à l'axe du conduit, sont choisis de l'ordre de 50 à 60°, ce qui est important et entraîne une tenue longitudinale faible qui pénalise la résistance en traction, et augmente les effets d'allongement du tube composite.

Un des buts de l'invention consiste par conséquent en un procédé qui évite les inconvénients propres aux systèmes connus évoqués précédemment et qui permet de fixer un embout métallique sur un tube en matériau composite suivant une procédure simple, nécessitant un minimum d'interventions manuelles et donc automatisables.

L'objet de l'invention consiste donc en un procédé pour intégrer un embout métallique à un tube en matériau composite bobiné qui consiste à bobiner en continu des fibres essentiellement longitudinales à la fois autour d'un mandrin cylindrique pour constituer la partie courante du tube composite et autour d'un embout métallique ayant la forme d'un double cône, procédé selon lequel on bobine sur le mandrin et l'embout des fibres longitudinales ou des nappes de fibres longitudinales qui font retour autour de picots répartis sur une bague positionnée sur une partie filetée extérieurement qui prolonge l'embout métallique double cône, selon lequel on coupe le composite non encore polymérisé lorsque toutes les fibres longitudinales sont en place, selon lequel on retire la bague avec ses picots, selon lequel on avance un écrou sur la partie filetée extérieurement jusqu'à venir en butée contre l'extrémité de la partie conique de l'embout et selon lequel on bobine des fibres circonférentielles qui sont calées par l'écrou, directement au-dessus des fibres longitudinales, avant d'assurer une polymérisation finale du tube.

D'autre part une fibre ou une nappe de fibres longitudinales peut faire retour autour de deux picots en ayant une trajectoire circonférentielle entre les deux picots qu'elle contourne.

Selon une autre caractéristique particulière de l'invention, préalablement au bobinage en continu des fibres longitudinales, on bobine sur la partie du mandrin, non coiffée par l'embout, une peau d'étanchéité en élastomère.

Selon une variante est aussi prévu d'assurer un collage au niveau de l'interface entre le composite et l'embout métallique, par l'intermédiaire d'une feuille élastomère.

Les caractéristiques et avantages de l'invention seront maintenant décrits en faisant référence aux dessins annexés qui représentent :

Figure 1 une vue schématique en coupe d'un tube composite lié à l'embout métallique ;

Figure 3 une vue schématique en coupe d'un autre mode simplifié de liaison.

Figure 4 une vue schématique en coupe d'une variante de la figure 3.

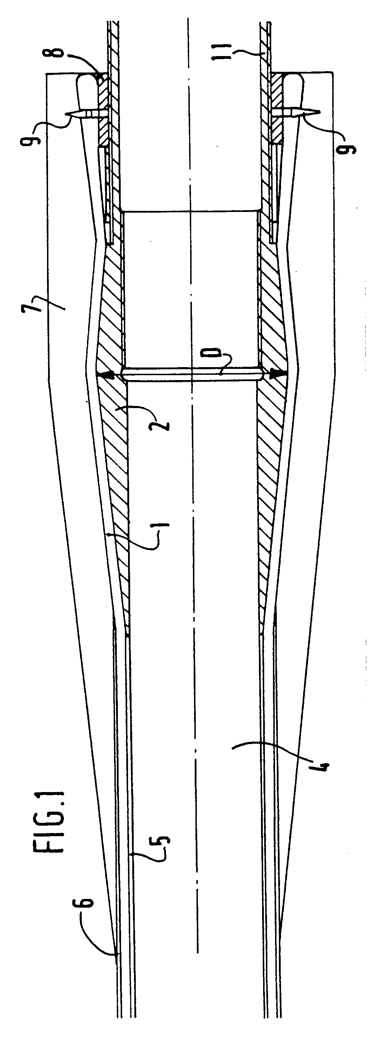

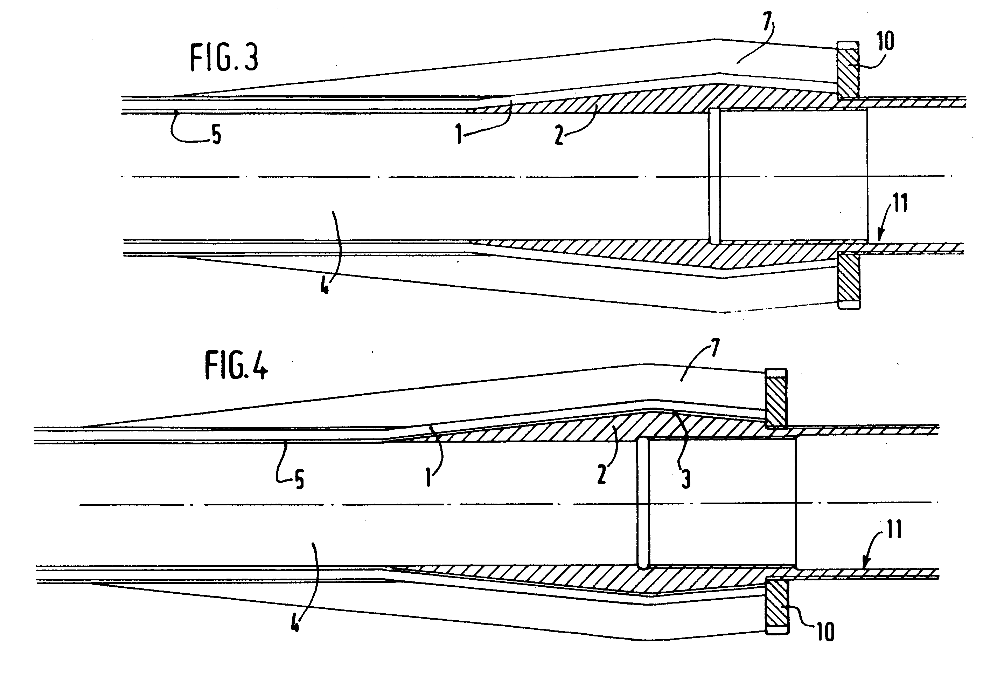

On a représenté à la figure 1 un embout métallique 2 de forme dite à double-cône, c'est-à-dire dont la paroi extérieure s'épaissit progressivement à partir d'une de ses extrémités jusqu'à son diamètre extérieur D le plus important puis décroit en direction de son autre extrémité. Cet embout 2 est destiné à être enveloppé dans des fibres longitudinales qui constituent le tube 1 en matériau composite. Un frettage en fibres circonférentielles 7 recouvre le tube et l'embout et maintient solidement les fibres composites longitudinales en contact étroit contre l'embout ainsi inséré dans les fibres. On comprend qu'avec une telle disposition, un effort de traction appliqué à l'embout soit transmis au composite par effet de coïncement; l'épaisseur du frettage circonférentiel 7 est calculée de manière à reprendre les efforts radiaux induits par la forme conique de l'insert. En effet un effort de traction tend à écarter le composite et si le frettage 7 est suffisant, l'embout 2, du fait de sa forme à double-cône ne peut s'écarter et reste emprisonné. L'efficacité de cette connexion par coincement est maximum lorsque l'embout s'est déplacé par rapport au composite, car il y a autoserrage. Quant aux fibres longitudinales constituant le tube 1, destinées à reprendre les efforts de traction dans le tube, elles sont bobinées avec des angles pouvant aller de 5 à 40° par rapport à l'axe du tube. Le tube peut comprendre également sur sa partie courante des fibres circonférentielles 6.

L'embout métallique double-cône 2 ainsi représenté est prolongé par une partie 11 filetée extérieurement, qui est destinée à servir au raccordement de différents tubes entre eux. On profite de ce filetage pour positionner une bague 8 sur la périphérie de laquelle sont implantés une série de picots 9, qui peuvent être inclinés par rapport à un plan perpendiculaire à l'axe du tube. Cette inclinaison permet de faciliter l'accrochage.

Quand on veut réaliser cet ensemble de liaison, ou commence par enfiler sur un mandrin support 4 l'embout 2 muni de sa bague 8. Puis on bobine sur la partie de mandrin non coiffée par l'embout, une peau d'étanchéité en élastomère 5. Ensuite les fibres longitudinales constituant le tube 1 sont bobinées en continu en faisant retour autour des picots 9 portés par les bagues 8. Plus précisément une fibre longitudinale ou une nappe de fibres longitudinales vient contourner un picot 9 puis, selon une petite trajectoire circonférentielle, va atteindre un autre picot 9 voisin pour le contourner lui-même et faire retour pour repartir longitudinalement au-dessus de l'embout et du tube On notera que les fibres peuvent ainsi contourner un seul picot ou deux picots immédiatement voisins ou encore deux picots non immédiatement voisins. Dans ce dernier cas les fibres ont une trajectoire circonférentielle au-dessus de la bague 8 entre les deux picots qu'elles contournent. Ainsi les fils sont-ils stabilisés lors de l'inversion du sens de dépose des fibres longitudinales. A la suite de cela, comme indiqué précédemment, un enroulement circonférentiel 7 vient fretter lesdites couches longitudinales sur l'embout métallique 2. Une polymérisation finale du tube donne au composite ses propriétés définitives.

Selon l'invention tel que représenté à la figure 3, lorsque toutes les nappes longitudinales sont en place, le composite non encore polymérisé est coupé, la bague à picots est retirée, puis un écrou 10 est avancé sur le filetage 11 jusqu'à venir en butée contre l'extrémité de la partie conique de l'embout 2. Puis un renfort de fibres circonférentielle 7 est bobiné, son extrémité étant maintenue et calée par l'écrou 10. Une polymérisation finale donne au tube sa rigidité. L'allongement lié à la traction peut être relativement important, et seulement compensé par un effet de coïncement entre le tube et l'embout double cône 2 c'est pourquoi, on a intérêt, comme représenté à la figure 4 à lier le composite à l'embout métallique 2 par collage par exemple à l'aide de colle époxy, au niveau de l'interface embout-tube par l'intermédiaire d'une feuille élastomère 3. Les mouvements relatifs du métal par rapport au composite seront alors limités à la déformation en cisaillement des couches d'accrochage constituées de la couche d'élastomère 3 qui prolonge la couche élastomère 5 prévue autour de la partie courante du tube.

Les moyens d'accrochage des fibres longitudinales qui peuvent être des aiguilles, des crochets ou systèmes analogues pouvant remplacer les picots.

**Revendications**

1. Procédé pour intégrer un embout métallique à un tube en matériau composite, dans lequel on bobine en continu des fibres à la fois autour d'un mandrin cylindrique pour constituer la partie courante du tube composite et autour d'un embout métallique ayant la forme générale extérieure d'un double cône, caractérisé en ce qu'on bobine sur le mandrin (4) et l'embout (2) des fibres longitudinales (1) ou des nappes de fibres longitudinales qui font retour autour de picots (9) répartis sur une bague (8) positionnée sur une partie (11) filetée extérieurement qui prolonge l'embout métallique double cône, en ce que l'on coupe le composite non encore polymérisé lorsque toutes les fibres longitudinales sont en place, en ce qu'on retire la bague avec ses picots, en ce qu'on avance un écrou (10) sur la partie filetée extérieurement jusqu'à venir en butée contre l'extrémité de la partie conique de l'embout et, en ce qu'on bobine des fibres circonférentielles (7) qui sont calées par l'écrou, directement au-dessus des fibres longitudinales, avant d'assurer une polymérisation finale du tube.

2. Procédé selon la revendication 1, caractérisé en ce que les fibres longitudinales constituant le tube (1) sont bobinées selon des angles variant de 5 à 40° par rapport à l'axe du tube.

3. Procédé selon la revendicatin 1, caractérisé en ce que des fibres circonférentielles (6) sont également directement bobinées sur la partie courante du tube (1).

4. Procédé selon la revendication 1, caractérisé en ce que les picots (9) sont inclinés par rapport à un plan perpendiculaire à l'axe du tube.

5. Procédé selon la revendication 1, caractérisé en ce que, préalablement au bobinage en continu des fibres longitudinales (1), on bobine sur la partie du mandrin (4), non coiffé par l'embout (2) une peau d'étanchéité en élastomère (5).

6. Procédé selon là revendication 1, caractérisé en ce qu'une fibre ou une nappe de fibres longitudinales fait retour autour de deux picots (9) ayant une trajectoire circonférentielle entre les deux picots qu'elle contourne.

7. Procédé selon la revendication 1, caractérisé en ce qu'un collage est assuré au niveau de l'interface entre le composite et l'embout métallique par l'intermédiaire d'une feuille élastomère.

**Claims**

1. Method for integrating a metallic end-piece in a tube made of composite material, in which fibres are continuously wound both about a cylindrical mandrel so as to constitute the running portion of the composite tube and round a metallic end-piece having the general external shape of a double cone, characterised in that there are wound onto the mandrel (4) and the end-piece (2) longitudinal fibres (1) or layers of longitudinal fibres which are turned back round studs (9) distributed on a ring (8) positioned on an externally threaded portion (11) which extends the double cone metallic end-piece, in that the as yet unpolymerised composite is cut when all the longitudinal fibres are in place, in that the ring with its studs is withdrawn, in that a nut (10) is advanced on the externally threaded portion until it comes to a stop against the end of the conical portion of the end-piece, and in that circumferential fibres (7) which are held in placed by the nut are wound directly over the longitudinal fibres, before carrying out a final polymerisation of the tube.

2. Method according to Claim 1, characterised in that the longitudinal fibres constituting the tube (1) are wound at angles varying from 5 to 40° with respect to the axis of the tube.

3. Method according to Claim 1, characterised in that circumferential fibres (6) are also wound directly on the running portion of the tube (1).

4. Method according to Claim 1, characterised in that the studs (9) are inclined with respect to a plane perpendicular to the axis of the tube.

5. Method according to Claim 1, characterised in that, prior to the continuous winding of the longitudinal fibres (1), an elastomeric sealing film (5) is wound onto the portion of the mandrel (4) which is not capped by the end-piece (2).

6. Method according to Claim 1, characterised in that a fibre or a layer of longitudinal fibres is turned back round two studs (9) having a circumferential path between the two studs round which it passes.

7. Method according to Claim 1, characterised in that an adhesive process is carried out at the interface between the composite and the metallic end-piece by means of an elastomeric foil.

## Patentansprüche

1. Verfahren zum Anbringen eines metallischen Endstückes auf ein aus Verbundmaterial bestehendes Rohr, bei dem Fasern fortlaufend zugleich um eine zylindrische Wickelhülse herum zur Bildung des laufenden Teils des Verbundrohres und um ein metallisches Endstück herum, das die allgemeine äußere Form eines Doppelkegels aufweist, gewickelt werden, gekennzeichnet dadurch, daß longitudinale Fasern (1) oder Gelege aus longitudinalen Fasern, die um Dorne (9) herum zurücklaufen, welche auf einem Ring (8) verteilt sind, der auf einem außen mit einem Gewinde versehenen Teil (11) angeordnet ist, welcher das doppelkegelförmige metallische Endstück verlängert, auf die Wickelhülse (4) und das Endstück (2) gewickelt werden, dadurch, daß der noch nicht polymerisierte Verbund beschnitten wird, wenn alle longitudinalen Fasern angebracht sind, dadurch, daß der Ring mit seinen Dornen entfernt wird, dadurch, daß eine Mutter (10) auf dem außen mit einem Gewinde versehenen Teil vorgeschoben wird, bis sie gegen das Ende des konischen Teils des Endstückes zum Anschlag kommt, und dadurch, daß Umfangsfasern (7), die durch die Mutter fixiert sind, direkt über die longitudinalen Fasern gewickelt werden, bevor eine endgültige Polymerisation des Rohres erfolgt.

2. Verfahren nach Anspruch 1, dadurch gekennzeichnet, daß die das Rohr (1) bildenden longitudinalen Fasern mit zwischen 5° und 40° variierenden Winkeln in Bezug auf die Achse des Rohres gewickelt werden.

3. Verfahren nach Anspruch 1, dadurch gekennzeichnet, daß außerdem Umfangsfasern (6) direkt auf den laufenden Teil des Rohres (1) gewickelt werden.

4. Verfahren nach Anspruch 1, dadurch gekennzeichnet, daß die Dorne (9) bezüglich einer zur Achse des Rohres senkrechten Ebene geneigt sind.

5. Verfahren nach Anspruch 1, dadurch gekennzeichnet, daß der fortlaufenden Wicklung der longitudinalen Fasern (1) vorausgehend eine Abdichthaut (5) aus Elastomer auf den Teil der Wickelhülse (4) gewickelt wird, der nicht durch das Endstück (2) überdeckt ist.

6. Verfahren nach Anspruch 1, dadurch gekennzeichnet, daß eine Faser oder ein Gelege aus longitudinalen Fasern um zwei Dorne (9) herum zurückläuft, wobei sie zwischen den zwei Dornen, die sie umfährt, eine Umfangsbahn beschreibt.

7. Verfahren nach Anspruch 1, dadurch gekennzeichnet, daß auf Höhe der Grenzfläche zwischen dem Verbund und dem metallischen Endstück mittels einer Elastomerfolie eine Verklebung angebracht wird.

FIG.1

EP 0 377 382 B1

FIG.3

FIG.4

EP 0 377 382 B1